# EUROPEAN PATENT SPECIFICATION

(11) **EP 3 390 733 B1**
(45) Date of publication and mention of the grant of the patent: **26.06.2019**
(21) Application number: 16808781.5
(22) Date of filing: 02.12.2016
(51) Int. Cl.: E03C 1/04, G05D 23/13, F16K 11/044, F16K 27/02

(54) **PLUMBING FIXTURES**
SANITÄRE ANLAGEN
ACCESSOIRES DE PLOMBERIE

(30) Priority: 17.12.2015 GB 201522322
(43) Date of publication of application: 24.10.2018
(73) Proprietor: Kohler Mira Limited, Cheltenham, Gloucestershire GL52 5EP (GB)
(72) Inventor: JONES, Oliver, Cheltenham, Gloucestershire GL52 5EP (GB); BUMPSTEED, Austin, Cheltenham, Gloucestershire GL52 5EP (GB)
(74) Representative: Barker Brettell LLP
(86) International application number: PCT/GB2016/053807
(87) International publication number: WO 2017/103567

(56) References cited:
- EP-A1- 1 672 257
- WO-A1-02/46853
- WO-A1-2010/038036
- DE-A1- 3 643 528
- GB-A- 1 441 243
- GB-A- 2 340 210
- JP-A- 2004 036 118

## Description

This invention relates to a faucet according to the preamble of claim 1, and to a method of installing a faucet according to the preamble of claim 15. The invention has particular, but not exclusive, application to mixer valves for shower systems.

A shower mixer valve has separate inlets for connection to supplies of hot and cold water and an outlet for connection to a shower head such as a handset or a spray head. When installing the valve, the pipework for the hot and cold supplies must be plumbed into position for connection to the inlets. It is an industry standard in the UK that the hot supply is on the left hand side and the cold supply is on the right hand side and shower mixer valves are configured with the inlets arranged accordingly for connection to the hot and cold supplies.

A typical shower mixer valve comprises a valve body housing a cartridge designed to mix hot and cold water to provide outlet water having a desired temperature. The cartridge has hot and cold sides separated from one another for receiving hot and cold water from the inlets and this arrangement requires the inlets to be connected to the correct supplies. However, sometimes by mistake or other reason the arrangement of the pipework may be reversed so that the cold supply is on the left hand side and the hot supply is on the right hand side. If the valve is installed with the inlets connected to the wrong supplies, i.e. the cold inlet connected to the hot supply and the hot inlet connected to the cold supply, the valve may not function correctly and/or performance may be impaired.

One solution to the problem of installing the valve when the arrangement of the pipework is reversed from the industry standard is to provide the valve with two outlets, one on the top and another on the bottom of the valve body. This allows the installer to rotate the whole valve through 180 degrees to connect the inlets to the correct supplies and connect one of the outlets for supplying outlet water to a spray fitting such as a handset or spray head. With this arrangement the outlet that is not used is closed with a blanking plug. This is a relatively simple solution but is not aesthetically pleasing as the blanking plug is always visible.

Another solution to the problem of installing the valve when the arrangement of the pipework is reversed from the industry standard is to remove the cartridge from the valve body, turn the cartridge through 180 degrees and re-insert the cartridge in the valve body to connect the inlets to the correct side of the cartridge. Such an arrangement is described in Applicants earlier UK Patent 2291693B. With this arrangement, when reversing the installed position of the cartridge, the installer has to adjust the stops on the cartridge so the valve has the same operation. This is a more aesthetically pleasing solution than the use of blanking plugs but requires a plumber or other skilled person to remove, adjust and replace the cartridge in the valve body.

DE3643528A1 describes a device for the wall connection of a mixer unit with reverse arranged hot and cold water supply lines in order to produce a standard connection gauge for sanitary mixer units. For each of the hot and cold water supply lines, a first angle piece can be connected to a connection piece and can be joined to a second angle piece, exhibiting a connection opening for the mixer unit.

This document is selected as representing the closest prior art.

GB1441243A describes a hot and cold water mixing valve in which an inlet valve member varies inversely the openings of the inlets according to the movements of a thermostat and moves relative the inlets on rotation of a rotary but axially fixed control member which is connected by a buttress thread to a sleeve that acts via a prestressed spring and an adjustment screw in a member on the end of the thermostat.

GB2340210A describes a mixing valve for the supply of temperature controlled water to an ablutionary appliance such as a shower in which a valve member 35 is axially movable between a cold seat and a hot seat to control and regulate mixing of hot and cold water in accordance with adjustable selection of outlet water temperature.

WO02/46853A1 describes a mixer tap having a body with a cold water pipe connection, a hot water pipe connection and a mixed water outlet connection. A flow control knob and a water temperature control knob are provided at the front of the tap. The tap has a flow mixer cartridge, which is sealed in a cavity in the body. The collar has three sealing grooves carrying O-rings. The groove and its O-ring have a complementary, oblique shape. The cartridge has a shuttle arranged between rear and front barrel portions to thermostatically control water temperature in conjunction with a thermostatic capsule and the water temperature control knob. To the rear of the cartridge there is provided a flow controller. This is connected to the flow control knob via actuation fingers, which pass through the shuttle.

WO2010038036A1 describes a mixing valve having a pair of inlet connector assemblies that are operable to connect the mixing valve to supply pipes for hot and cold water. The connector assemblies are adjustable to enable the mixing valve to be connected to the supply pipes to compensate for variations in one or more of the spacing, depth and angular position of the supply pipes.

EP1672257A1 describes a thermostatic mixing vale for hot and cold water having a valve member axially movable between opposed hot and cold seats to vary the relative proportions of hot and cold water admitted to a mixing chamber according to user selection of a desired water temperature and a thermostat responsive to the mixed water temperature to adjust the position of the valve member to maintain constant the selected water temperature. The valve member is biased by a return spring in the form of a wave spring having a plurality of turns with transverse waves configured such that adjacent turns sit peak to peak. The wave spring is strong in compression and weak in torsion allowing the ends of the spring to move laterally to accommodate any misalignment in the components of the valve.

The faucet has a hot water side fitting leg forming a hot water stream way, a water side fitting leg forming a cold water stream way, a hot water receiving passage, and a cold water receiving passage. The faucet also has a base seat installed on a faucet fitting face, and a faucet body having a hot water introduction passage, and a cold water introduction passage. The base seat has a bottom face in which a hot water side connection opening to which the hot water side fitting leg is connected communicates with a first hole, and in which a cold water side connection opening to which the cold water side fitting leg is connected communicates with a second hole. Moreover at least two sets of the hot water side connection opening and the cold water side connection opening are provided.

According to a first aspect of the invention, there is provided a faucet having a valve for mixing hot and cold water, the valve having a hot side for receiving hot water and a cold side for receiving cold water, a first inlet with an inlet adaptor for connecting a first supply of water to one of the hot side and the cold side of the valve, and a second inlet with an inlet adaptor for connecting a second supply of water to the other of the hot side and the cold side of the valve, wherein each inlet communicates with both the hot side and cold side of the valve and the associated inlet adaptor is arranged to permit fluid flow to one side and to block fluid flow to the other side.

The inlet adaptors allow the faucet to be configured with the inlet adaptors either connecting the first inlet to the cold side and the second inlet to the hot side or connecting the first inlet to the hot side and the second inlet to the cold side. In this way, the inlets can be configured for connecting a supply of cold water to the cold side of the valve or a supply of hot water to the hot side of the valve for connecting the hot and cold sides of the valve to the correct supply of hot and cold water by means of the inlet adaptors.

It may be that each inlet has an opening to the hot side and another opening to the cold side of the valve wherein one of the openings is closed by the inlet adaptor to block fluid flow to one side of the valve and the other opening is open to permit fluid flow to the other side of the valve.

In one arrangement, the inlet adaptors comprise members that can be fitted in the inlet openings to block fluid flow. It may be that the members are configured so that only one member can be fitted in each inlet to close the opening to either the hot side or the cold side of the valve. In this way the faucet cannot be installed with both openings associated with an inlet closed to prevent fluid flow to both the hot and cold sides of the valve.

It may be that two members are provided, one member being configured to close an opening to the cold side of the valve and the other member being configured to close an opening to the hot side of the valve. The members may be distinguished by size and/or shape and/or colour. In this way, the member for closing an opening to the cold side of the valve can be installed in one of the inlets and the member for closing an opening to the hot side of the valve can be installed in the other inlet and the installation of the members can be reversed to configure the inlets according to whether the supply of water connected to the inlet is hot water or cold water.

It may be that, the openings and/or members are configured so that the member for closing an opening to the hot side of the valve cannot be installed in an opening to the cold side of the valve, and the member for closing an opening to the cold side of the valve cannot be installed in an opening to the hot side of the valve. In this way the faucet cannot be installed with openings to the same side of the valve blocked.

In another arrangement, the inlet adaptors comprise members having a first position in which fluid flow to the cold side of the valve is blocked and fluid flow to the hot side of the valve is permitted and a second position in which fluid flow to the cold side of the valve is permitted and fluid flow to the hot side of the valve is blocked. In this way, the one inlet provides fluid flow to the cold side of the valve when the associated inlet adaptor is in the second position and the other inlet provides fluid flow to the hot side of the valve when the associated inlet adaptor is in the first position.

It may be that each inlet adaptor has a solid portion blocking fluid flow and an apertured portion permitting fluid flow. It may be that the apertured portion comprises one or more apertures. It may be that in the first position, the solid portion blocks the opening to the cold side of the valve and the apertured portion aligns with the opening to the hot side of the valve. It may be that in the second position, the solid portion blocks the opening to the hot side of the valve and the apertured portion aligns with the opening to the cold side of the valve.

It may be that each inlet adaptor can be switched between the first and second positions for reversing the hot and cold water connections to the valve. It may be that each inlet includes an actuator for manually switching the associated inlet adaptor between the first and second positions. It may be that the inlet adaptors are rotatable between the first and second positions. It may be that the first and second positions correspond to rotation of the inlet adaptors through 180 degrees. It may be that each inlet includes a marker for providing a visual indication of the position of the associated inlet adaptor.

According to a second aspect of the invention, there is provided a method of installing a faucet having a valve for mixing hot and cold water, the method including the steps of providing a first inlet with an inlet adaptor for connecting a first supply of water to one of a hot side, for receiving hot water, and a cold side, for receiving cold water, of the valve, and a second inlet with an inlet adaptor for connecting a second supply of water to the other of the hot side and cold side of the valve, and configuring the inlet adaptors for connecting the hot and cold sides of the valve to the correct supplies, wherein each inlet communicates with both the hot side and cold side of the valve and the associated inlet adaptor is arranged to permit fluid flow to one side and to block fluid flow to the other.

The inlet adaptors allow the faucet to be configured with the inlet adaptors arranged either for connecting the first inlet to the cold side and the second inlet to the hot side or for connecting the first inlet to the hot side and the second inlet to the cold side. In this way, the inlets can be reversed for connecting the hot and cold sides of the valve to the correct supply by setting the inlet adaptors according to whether the incoming supplies are hot or cold water.

The inlet adaptors may comprise any of the features of the first aspect of the invention.

The invention will now be described in more detail by way of example only with reference to the accompanying drawings wherein:
**Figure 1** is a sectional view of a valve assembly according to the invention with the inlet adaptors in a first configuration;
**Figure 2** is a perspective view from one side of the valve body shown in Figure 1;
**Figure 3** is a sectional view, similar to Figure 1, with the inlet adaptors in a second configuration;
**Figure 4** is a perspective view from one side of the valve body shown in Figure 3;
**Figure 5** is a perspective view of a shower mixer valve;
**Figure 6** is a sectional view of a modification to the valve assembly shown in Figures 1 to 4;
**Figure 7** is a perspective view from one side showing a modification to the valve assembly of figures 1 to 4;
**Figure 8** is a perspective view from the other side of the modification of Figure 7; and
**Figures 9** **and** **10** are perspective views showing the relationship between the inlet adaptors.

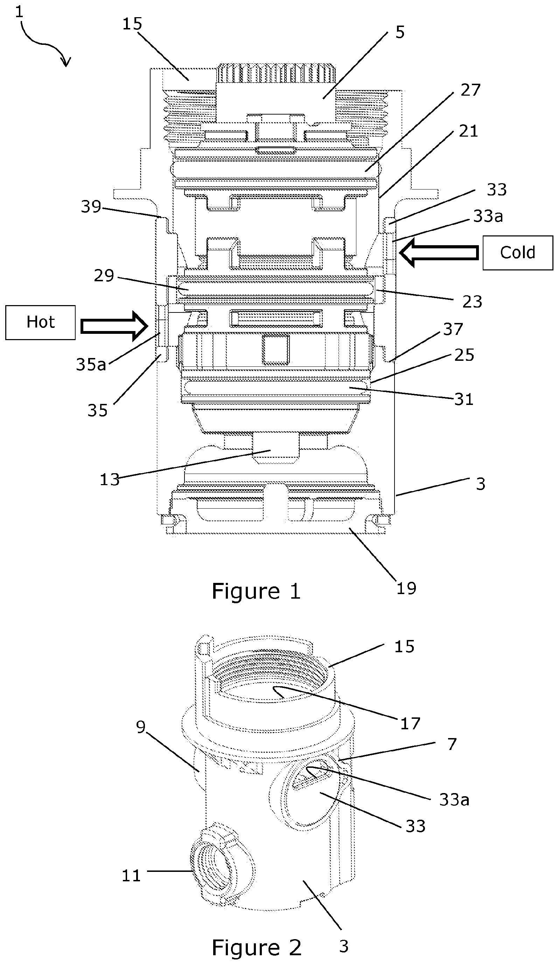

Referring first to Figures 1 to 4, a valve assembly 1 is shown having a valve cartridge body 3 and a valve cartridge 5 received in the valve cartridge body 3. The valve cartridge body 3 has inlets 7, 9 for connection to supplies of hot and cold water and an outlet 11 for connection to a supply fitting such as shower spray head or shower handset. The supplies of hot and cold water flow from the inlets 7, 9 through the valve cartridge 5 to the outlet 11.

Within the valve cartridge 5, the supplies of hot and cold water can be mixed to provide a source of blended water at the outlet 11 having a desired temperature according to user selection. The valve cartridge 5 may comprise a shuttle valve having a valve member movable between hot and cold seats to control the relative proportions of hot and cold water admitted to a mixing chamber where the water is mixed to provide the user selected temperature at the outlet 11. The valve cartridge 5 may be arranged to allow the user to select outlet water temperature from full cold through to full hot.

The valve cartridge 5 may be thermostatic with a sensor 13, for example a thermostat, for monitoring the water temperature in the mixing chamber, and the shuttle valve may be responsive to a detected change in outlet water temperature from that selected, for example due to changes in the temperature and/or pressure of one or both inlet supplies, to adjust the relative proportions of hot and cold water to return the outlet water temperature to that selected by the user. In other embodiments, the valve cartridge 5 may be non-thermostatic.

The valve cartridge 5 may be a push fit in the valve cartridge body 3 through an opening 15 at one end of the valve cartridge body 3. The valve cartridge body 3 has an internal bore 17 leading from the opening 15 to the other end of the valve cartridge body 3. The internal bore 17 is closed at the other end of the valve cartridge body 3 by an end cap 19. In other embodiments (not shown), the end cap 19 may be omitted and the internal bore 17 closed by an end wall integral with the valve cartridge body 3.

The internal bore 17 is provided with three axially spaced annular sealing faces 21, 23, 25 and the valve cartridge 5 is provided with three axially spaced annular sealing members 27, 29, 31 such as O-rings that are engageable with the sealing faces 21, 23, 25 respectively.

The sealing faces 21, 23, 25 are arranged coaxially and reduce in diameter in the direction of insertion of the valve cartridge 5 from the sealing face 21 to the sealing face 25. The sealing members 27, 29, 31 are also arranged coaxially and reduce in diameter in the direction of insertion of the valve cartridge 5 from the sealing member 27 to the sealing member 31.

The progressive change in diameter of the sealing faces 21, 23, 25 within the internal bore 17 and sealing members 27, 29, 31 on the valve cartridge 5 may be advantageous when inserting the valve cartridge 5 into the valve cartridge body 3 and/or removing the valve cartridge 5 from the valve cartridge body 3. Thus the force to insert/remove the valve cartridge 5 may be reduced and/or damage to the sealing members 27, 29, 31 may be avoided. In other embodiments, the sealing faces 21, 23, 25 and sealing members 27, 29, 31 may be of the same diameter.

The valve cartridge 5 has a hot side for connection to the incoming supply of hot water and a cold side for connection to the incoming supply of cold water. The hot side and cold side are separated by engagement of the sealing member 29 with the sealing face 23. In this embodiment, the cold side is positioned in the area between the sealing member 27 and the sealing member 29, and the hot side is positioned in the area between the sealing member 29 and the sealing member 31. The hot side and cold side may be reversed in other embodiments.

Each inlet 7, 9 is provided with an inlet adaptor member 33, 35 respectively by means of which each inlet 7, 9 can selectively communicate with the hot side or the cold side of the valve cartridge 5. The inlet adaptor members 33, 35 allow the valve assembly 1 to be configured either with inlet 7 designated the "cold" inlet and inlet 9 designated the "hot" inlet or with inlet 9 designated the "cold" inlet and inlet 7 designated the "hot" inlet. In this way the hot and cold designation of each inlet 7, 9 can be switched to match the orientation of the incoming supplies of hot and cold water without changing the installed orientation of the valve assembly 1.

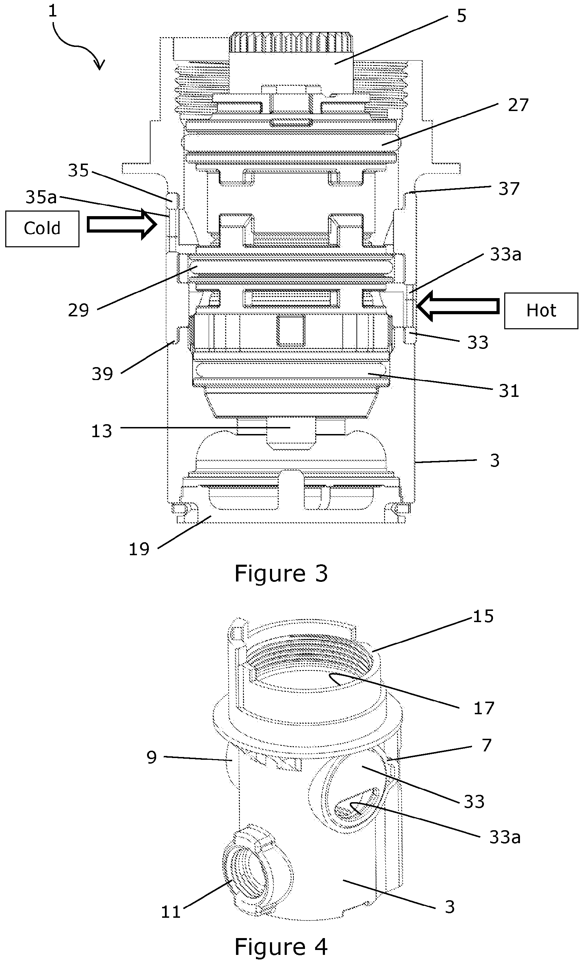

A first configuration of the inlet adaptor members 33, 35 is shown in Figures 1 and 2 with the inlet 7 configured as the "cold" inlet for connection to the cold supply and the inlet 9 configured as the "hot" inlet for connection to the hot supply. A second configuration of the inlet adaptor members 33, 35 is shown in Figures 3 and 4 with the inlet 7 configured as the "hot" inlet for connection to the hot supply and the inlet 9 configured as the "cold" inlet for connection to the cold supply.

In the first configuration (Figures 1 and 2), the inlet adaptor member 33 configures the inlet 7 to connect the cold side of the valve cartridge 5 to the incoming supply of cold water through one or more apertures 33a in the inlet adaptor member 33 and blocks flow of cold water to the hot side of the valve cartridge 5, and the inlet adaptor member 35 configures the inlet 9 to connect the hot side of the valve cartridge 5 to the incoming supply of hot water through one or more apertures 35a in the inlet adaptor member 35 and blocks flow of hot water to the cold side of the valve cartridge 5.

In the second configuration (Figures 3 and 4), the inlet adaptor member 33 configures the inlet 7 to connect the hot side of the valve cartridge 5 to the incoming supply of hot water through the one or more apertures 33a and blocks flow of hot water to the cold side of the valve cartridge 5, and the inlet adaptor member 35 configures the inlet 9 to connect the cold side of the valve cartridge 5 to the incoming supply of cold water through the one or more apertures 35a and blocks flow of cold water to the hot side of the valve cartridge 5.

In this embodiment, the inlet adaptor members 33, 35 are annular and are received in annular openings 37, 39 respectively in the valve cartridge body 3. Each opening 37, 39 is in communication with the hot and cold sides of the valve cartridge 5 on opposite sides of the sealing member 29. A portion of each adaptor member 33, 35 is solid and another portion is provided with one or more apertures 33a, 35a. In this embodiment, each portion comprises one half of the adaptor member 33, 35.

When the adaptor members 33, 35 are arranged in the associated openings 37, 39 in the valve cartridge body 5 in the first configuration (Figures 1 and 2), the apertured portion of the adaptor member 33 connects the cold side of the valve cartridge 5 to the inlet 7 and the solid portion isolates the hot side from the inlet 7, and the apertured portion of the adaptor member 35 connects the hot side of the valve cartridge 5 to the inlet 9 and the solid portion isolates the cold side from the inlet 9.

The configuration of the adaptor members 33, 35 can be reversed to switch the connections so that when the adaptor members 33, 35 are arranged in the associated openings 37, 39 in the valve cartridge body 5 in the second configuration (Figures 3 and 4), the apertured portion of the adaptor member 33 connects the hot side of the valve cartridge 5 to the inlet 7 and the solid portion isolates the cold side from the inlet 7, and the apertured portion of the adaptor member 35 connects the cold side of the valve cartridge 5 to the inlet 9 and the solid portion isolates the hot side from the inlet 9.

The adaptor members 33, 35 and openings 37, 39 may be provided with means to locate the adaptor members 33, 35 in each configuration. For example, markings that are aligned to provide a visual indication when the adaptor members 33, 35 are correctly positioned and/or formations that engage to provide a physical indication when the adaptor members 33, 35 are correctly positioned. In this way installation of one or both adaptor members 33, 35 with the apertured portion communicating with both sides of the valve cartridge 5 can be prevented.

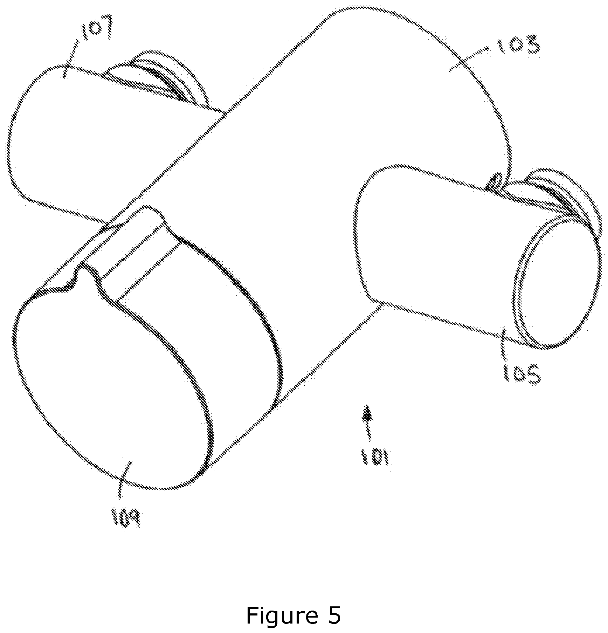

Referring now to Figure 5, a shower mixer valve 101 is shown having a cylindrical body 103 with inlet elbow connectors 105, 107 on each side for connection to supply pipes for hot and cold water. An outlet (not shown) for temperature controlled water is provided on the underside of the body 103, and a rotatable control knob 109 is arranged at the front end of the body 103 for user selection of outlet water temperature.

The shower mixer valve 101 may be provided with the valve assembly 1 of Figures 1 to 4 received in the valve body 103 and the inlet adaptors 33, 35 configured for installing the mixer valve 101 with the inlet elbow connector 105 connected to the supply pipe for cold water and the inlet elbow connector 107 connected to the supply pipe for hot water.

If, however, the supply pipes are reversed, the installer can remove the valve assembly 1 from the valve body 103, remove and re-fit the inlet adaptors 33, 35 in the inlets 7, 9 with the inlet adaptors 33, 35 configured for connecting the inlet elbow connector 105 to the supply pipe for hot water and the inlet elbow connector 107 to the supply pipe for cold water. The installer can then re-fit the valve assembly 1 in the valve body 103 so that the inlet elbow connectors 105, 107 can be connected to the supply pipes without changing the installed orientation of the shower mixer valve 101.

It will be understood that the invention is not limited to shower mixer valves of the type shown in Figure 5 and that the invention may be employed in any shower mixer valve where the valve is connected to supplies of hot and cold water.

In the embodiment shown in Figures 1 to 4, the installer has to remove and re-fit the valve assembly 1 when it is required to changeover the inlets 7, 9 from inlet 7 being the cold inlet and inlet 9 being the hot inlet to inlet 7 being the hot inlet and inlet 9 being the cold inlet and vice versa.

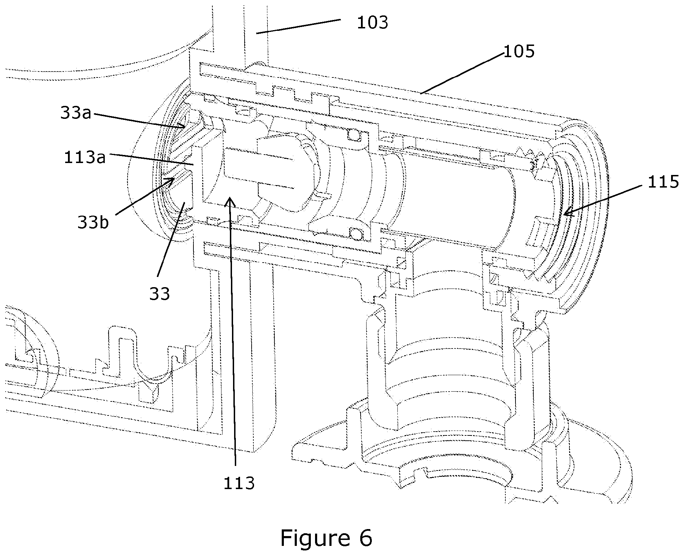

Figure 6 shows a modification that allows the installer to changeover the inlets 7, 9 without removing the valve assembly 1 from the valve body 103. Like reference numerals are used in Figure 6 to indicate parts that are the same or similar to the parts shown in Figures 1 to 5

In the modification of Figure 6, incoming supplies of hot and cold water are connected to inlet elbow connectors 105 (one only shown). Each connector 105 is similar and the following description of the connector 105 associated with the inlet adaptor member 33 will be understood to apply to the other connector associated with the inlet adaptor member 35. The inlet elbow connector 105 has an internal actuator member 113 that is operatively connected to the inlet adaptor member 33. For example the actuator member 113 may have a drive formation 113a, for example a projection such as a rib, and the inlet adaptor member 33 may have a coupling formation 33b, for example a recess such as a groove, engaged by the drive formation. The inlet adaptor member 33 may be rotated between the first and second positions by removing a detachable end cap (not shown) and inserting a tool into the open end 115 of the inlet elbow connector 105 to operate the actuator member 113. End stops may be provided to limit rotation of the actuator member 113 and define the first and second positions of the inlet adaptor member 33. Markers may be provided to indicate the configuration of the inlet 7 in each end position of the adaptor member 33. For example the end positions may be designated hot or cold by any suitable means such as by colour, for example red for hot and blue for cold and/or by one or more letters, for example "H" for hot and "C" for cold. The other inlet elbow connector has a similar arrangement for rotating the inlet adaptor member 35. In this embodiment, the internal actuator member 113 is a chassis or sleeve but may take different forms in other embodiments. For example the inlet adaptor members 33, 35 could be mounted in an housing and rotated with a screw driver or other suitable tool. In this embodiment, the angular spacing between the end positions of the inlet adaptor members 33, 35 is 180 degrees. This may not be essential and in other embodiments the angular spacing may be more than or less than 180 degrees.

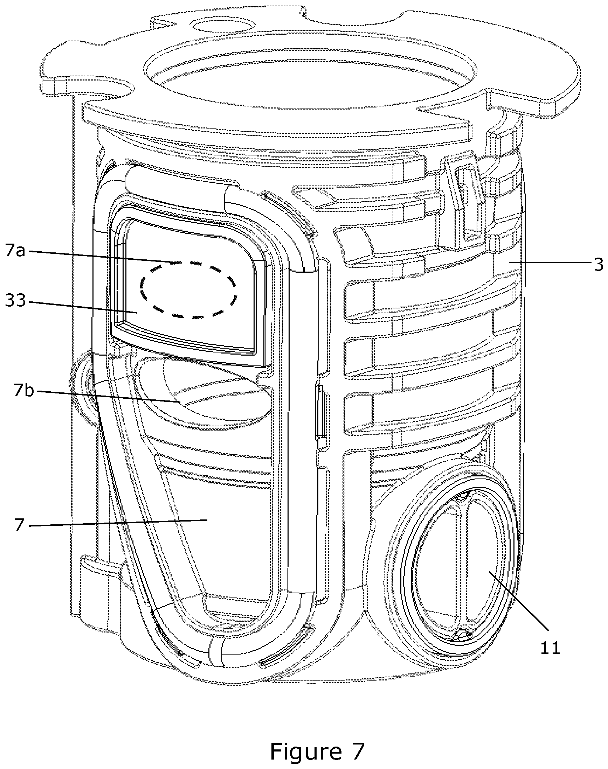

Referring now to Figures 7 to 10, a modification of the valve assembly 1 is shown in which like reference numerals in the series are used to indicate corresponding parts.

In this modification, the valve cartridge body 3 receives a valve cartridge (not shown) as described above and has inlets 7, 9 for connection to supplies of hot and cold water and an outlet 11 for connection to a supply fitting such as a shower spray head or shower handset.

Each inlet 7, 9 has two openings or ports 7a, 7b, 9a, 9b which, in this embodiment are of elliptical shape although this is not essential and the openings 7a, 7b, 9a, 9b may have other shapes. The openings 7a, 9a open to the cold side of the valve cartridge and the openings 7b, 9b open to the hot side of the valve cartridge.

The inlets 7, 9 are provided with inlet adaptor members 33, 35 by means of which the inlets 7, 9 can be configured to communicate with the hot side or the cold side of the valve cartridge 5.

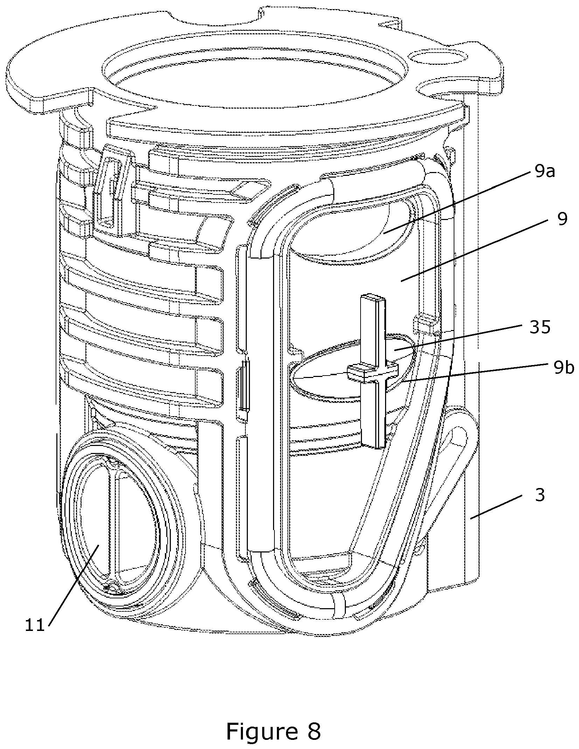

Figure 7 shows the inlet 7 configured for connection to the hot side of the valve cartridge through opening 7b by closing opening 7a with the inlet adaptor member 33 and Figure 8 shows the inlet 9 configured for connection to the cold side through opening 9a by closing the opening 9b with the inlet adaptor member 35.

The inlet adaptor members 33, 35 which may take the form of plugs, bungs or the like can be reversed or switched to configure the inlet 7 for connection to the cold side of the valve cartridge through opening 7a by closing opening 7b with the inlet adaptor member 35 and the inlet 9 for connection to the hot side through opening 9b by closing the opening 9a with the inlet adaptor member 33.

As shown in Figures 7 and 8, the size and shape of the inlets 7, 9 and the inlet adaptor members 33, 35 is preferably such that the adaptor member 33 can only be fitted in the openings 7a or 9a and the adaptor member 35 can only be fitted in the openings 7b or 9b. This prevents the faucet being assembled with both inlets configured to block flow to the same side of the valve cartridge.

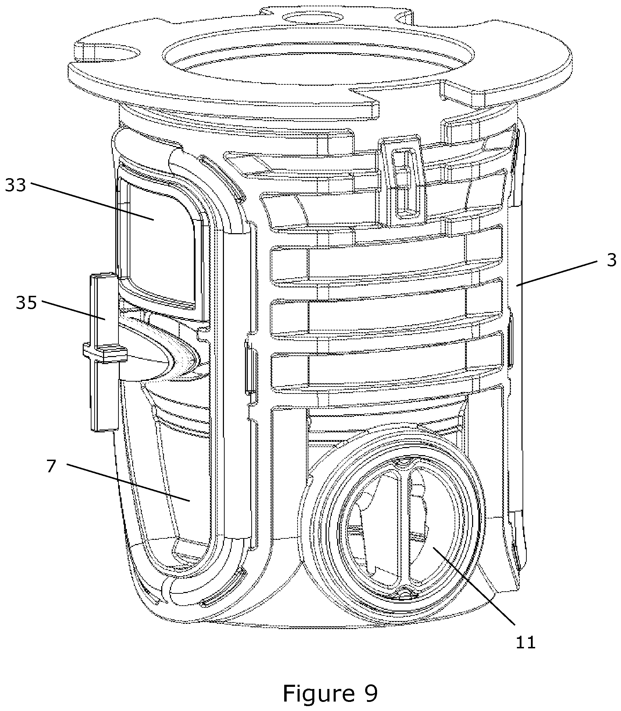

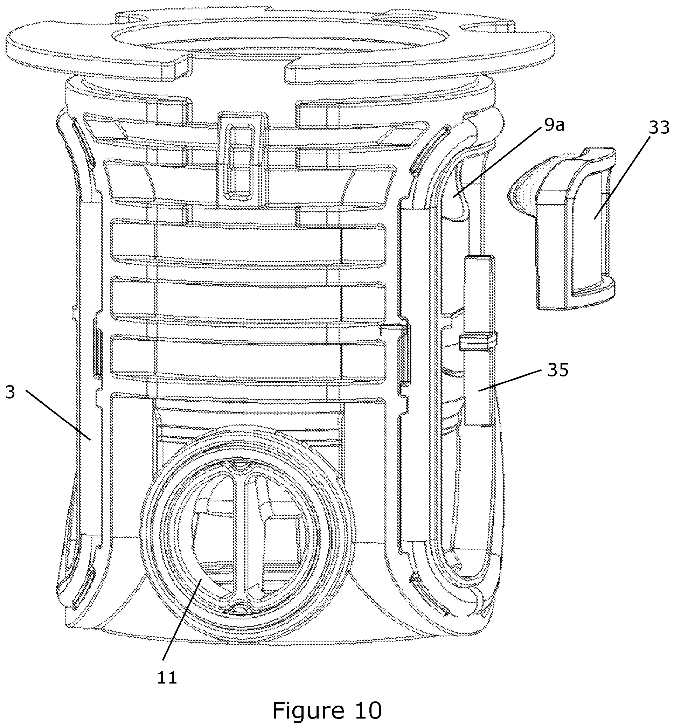

As shown in Figure 9, the size and shape of the inlet adaptor members is preferably such that, when the adaptor member 33 is fitted in the opening 7a of inlet 7, the adaptor member 35 cannot be fitted in the opening 7b. Similarly, as shown in Figure 10, the size and shape of the inlet adaptor members is preferably such that, when the adaptor member 35 is fitted in the opening 9b of inlet 9, the adaptor member 33 cannot be fitted in the opening 9a. This prevents the faucet being assembled with both adaptors fitted in the same inlet.

As will be appreciated, the inlet adaptors 33, 35 allow the valve assembly 1 to be configured either with inlet 7 designated the "cold" inlet and inlet 9 designated the "hot" inlet or with inlet 9 designated the "cold" inlet and inlet 7 designated the "hot" inlet. In this way the hot and cold designation of each inlet 7, 9 can be switched to match the orientation of the incoming supplies of hot and cold water without changing the installed orientation of the valve assembly 1.

In the embodiments described, the inlet adaptor members 33, 35 may be made of any suitable material. In some embodiments, the inlet adaptor members 33, 35 may provide a sealing function and may comprise an elastomeric material which may be over-moulded on a support to provide greater strength and/or location features. In the embodiments described the valve cartridge 5 is received in the valve cartridge body 3 that is received in the valve body 103. This may not be essential and in other embodiments the valve cartridge body 3 may be omitted and the valve cartridge 5 received in the valve body 103.

Although the invention has been described in the exemplary embodiments with reference to shower mixer valves, it will be understood that the invention has wider application to any faucet for mixing two fluids.

## Claims

1. A faucet having a valve for mixing hot and cold water, the valve having a hot side for receiving hot water and a cold side for receiving cold water, a first inlet (7) with an inlet adaptor (33) for connecting a first supply of water to one of the hot side and the cold side of the valve, and a second inlet (9) with an inlet adaptor (35) for connecting a second supply of water to the other of the hot side and the cold side of the valve, **characterised in that** each inlet (7, 9) communicates with both the hot side and cold side of the valve and the associated inlet adaptor (33, 35) is arranged to permit fluid flow to one side and to block fluid flow to the other side.

2. The faucet of claim 1 wherein the inlet adaptors (33, 35) can be configured to selectively connect either the first inlet (7) to the cold side and the second inlet (9) to the hot side or the first inlet (7) to the hot side and the second inlet (9) to the cold side.

3. The faucet of any preceding claim wherein each inlet (7, 9) has an opening to the hot side (7b, 9b) and another opening (7a, 9a) to the cold side of the valve wherein one of the openings (7a, 7b, 9a, 9b) is closed by the inlet adaptor (33, 35) to block fluid flow to one side of the valve and the other opening (7a, 7b, 9a, 9b) is open to permit fluid flow to the other side of the valve.

4. The faucet according to claim 3 wherein the inlet adaptors (33, 35) comprise members (33, 35) that can be fitted in the inlet openings (37, 39) to block fluid flow.

5. The faucet of claim 4 wherein the members (33, 35) are configured so that only one member (33, 35) can be fitted in each inlet (7, 9) to close the opening (37, 39) to either the hot side or the cold side of the valve.

6. The faucet of claim 4 or claim 5 wherein two members (33, 35) are provided, one member (33, 35) being configured to close an opening (7a, 9a) to the cold side of the valve and the other member (33, 35) being configured to close an opening (7b, 9b) to the hot side of the valve.

7. The faucet of any of claims 4 to 6 wherein the members (33, 35) are distinguished by size and/or shape and/or colour.

8. The faucet of any of claims 4 to 7 wherein the openings (37, 39) and/or members (33, 35) are configured so that the member (33, 35) for closing an opening (7b, 9b) to the hot side of the valve cannot be installed in an opening (7a, 9a) to the cold side of the valve, and the member (33, 35) for closing an opening (7a, 9a) to the cold side of the valve cannot be installed in an opening (7b, 9b) to the hot side of the valve.

9. The faucet of any of claims 1 to 3 wherein the inlet adaptors (33, 35) comprise members (33, 35) having a first position in which fluid flow to the cold side of the valve is blocked and fluid flow to the hot side of the valve is permitted and a second position in which fluid flow to the cold side of the valve is permitted and fluid flow to the hot side of the valve is blocked.

10. The faucet of claim 9 wherein each inlet adaptor (33, 35) has a solid portion blocking fluid flow and an apertured portion (33a, 35a) permitting fluid flow.

11. The faucet of claim 9 or claim 10 wherein each inlet adaptor (33, 35) can be switched between the first and second positions for reversing the hot and cold water connections to the valve.

12. The faucet of claim 11 wherein each inlet (7, 9) includes an actuator (113) for manually switching the associated inlet adaptor (33, 35) between the first and second positions.

13. The faucet of claim 12 wherein the inlet adaptors (33, 35) are rotatable between the first and second positions, optionally wherein the first and second positions correspond to rotation of the inlet adaptors (33, 35) through 180 degrees.

14. The faucet of any of claims 9 to 13 wherein each inlet (7, 9) includes a marker for providing a visual indication of the position of the associated inlet adaptor (33, 35).

15. A method of installing a faucet having a valve for mixing hot and cold water, the method including the steps of providing a first inlet (7) with an inlet adaptor (33) for connecting a first supply of water to one of a hot side, for receiving hot water, and a cold side, for receiving cold water, of the valve, and a second inlet (9) with an inlet adaptor (35) for connecting a second supply of water to the other of the hot side and cold side of the valve, and configuring the inlet adaptors (33, 35) for connecting the hot and cold sides of the valve to the correct supplies, **characterised in that** each inlet (7, 9) communicates with both the hot side and cold side of the valve and the associated inlet adaptor (33, 35) is arranged to permit fluid flow to one side and to block fluid flow to the other.

## Patentansprüche

1. Armatur, aufweisend ein Ventil zum Mischen von Warm- und Kaltwasser, wobei das Ventil eine warme Seite zum Empfangen von Warmwasser und eine kalte Seite zum Empfangen von Kaltwasser aufweist, einen ersten Einlass (7) mit einem Einlassadapter (33) zum Verbinden einer ersten Wasserversorgung mit einer der warmen Seite und der kalten Seite des Ventils, und einen zweiten Einlass (9) mit einem Einlassadapter (35) zum Verbinden einer zweiten Wasserversorgung mit der anderen der warmen Seite und der kalten Seite des Ventils,
**dadurch gekennzeichnet, dass**
jeder Einlass (7, 9) sowohl mit der warmen Seite als auch mit der kalten Seite des Ventils in Verbindung steht und der zugordnete Einlassadapter (33, 35) angeordnet ist, um einen Fluidstrom zu einer Seite zu ermöglichen und einen Fluidstrom zur anderen Seite zu blockieren.

2. Armatur nach Anspruch 1, wobei die Einlassadapter (33, 35) konfiguriert werden können, um entweder den ersten Einlass (7) mit der kalten Seite und den zweiten Einlass (9) mit der warmen Seite oder den ersten Einlass (7) mit der warmen Seite und den zweiten Einlass (9) mit der kalten Seite selektiv zu verbinden.

3. Armatur nach einem der vorherigen Ansprüche, wobei jeder Einlass (7, 9) eine Öffnung zur warmen Seite (7b, 9b) und eine weitere Öffnung (7a, 9a) zur kalten Seite des Ventils aufweist, wobei eine der Öffnungen (7a, 7b, 9a, 9b) durch den Einlassadapter (33, 35) geschlossen ist, um einen Fluidstrom zu einer Seite des Ventils zu blockieren, und die andere Öffnung (7a, 7b, 9a, 9b) geöffnet ist, um einen Fluidstrom zur anderen Seite des Ventils zu ermöglichen.

4. Armatur nach Anspruch 3, wobei die Einlassadapter (33, 35) Elemente (33, 35) umfassen, die in die Einlassöffnungen (37, 39) eingesetzt werden können, um einen Fluidstrom zu blockieren.

5. Armatur nach Anspruch 4, wobei die Elemente (33, 35) so konfiguriert sind, dass nur ein Element (33, 35) in jeden Einlass (7, 9) eingesetzt werden kann, um die Öffnung (37, 39) entweder zur warmen Seite oder zur kalten Seite des Ventils zu schließen.

6. Armatur nach Anspruch 4 oder Anspruch 5, wobei zwei Elemente (33, 35) vorgesehen sind, wobei ein Element (33, 35) konfiguriert ist, um eine Öffnung (7a, 9a) zur kalten Seite des Ventils zu schließen, und das andere Element (33, 35) konfiguriert ist, um eine Öffnung (7b, 9b) zur warmen Seite des Ventils zu schließen.

7. Armatur nach einem der Ansprüche 4 bis 6, wobei sich die Elemente (33, 35) durch Größe und/oder Form und/oder Farbe unterscheiden.

8. Armatur nach einem der Ansprüche 4 bis 7, wobei die Öffnungen (37, 39) und/oder Elemente (33, 35) so konfiguriert sind, dass das Element (33, 35) zum Schließen einer Öffnung (7b, 9b) zur warmen Seite des Ventils nicht in eine Öffnung (7a, 9a) zur kalten Seite des Ventils installiert werden kann, und das Element (33, 35) zum Schließen einer Öffnung (7a, 9a) zur kalten Seite des Ventils nicht in eine Öffnung (7b, 9b) zur warmen Seite des Ventils installiert werden kann.

9. Armatur nach einem der Ansprüche 1 bis 3, wobei die Einlassadapter (33, 35) Elemente (33, 35) umfassen, aufweisend eine erste Position, in der ein Fluidstrom zur kalten Seite des Ventils blockiert ist und ein Fluidstrom zur warmen Seite des Ventils zulässig ist, und eine zweite Position, in der ein Fluidstrom zur kalten Seite des Ventils zulässig ist und ein Fluidstrom zur warmen Seite des Ventils blockiert ist.

10. Armatur nach Anspruch 9, wobei jeder Einlassadapter (33, 35) einen festen Abschnitt aufweist, der einen Fluidstrom blockiert, und einen mit Öffnungen versehenen Abschnitt (33a, 35a), der einen Fluidstrom ermöglicht.

11. Armatur nach Anspruch 9 oder Anspruch 10, wobei jeder Einlassadapter (33, 35) zwischen der ersten und zweiten Position zum Umkehren der Warm- und Kaltwasseranschlüsse zum Ventil geschaltet werden kann.

12. Armatur nach Anspruch 11, wobei jeder Eingang (7, 9) ein Stellglied (113) zum manuellen Umschalten des zugehörigen Einlassadapters (33, 35) zwischen der ersten und zweiten Position beinhaltet.

13. Armatur nach Anspruch 12, wobei die Einlassadapter (33, 35) zwischen der ersten und zweiten Position drehbar sind, wobei gegebenenfalls die erste und zweite Position der Drehung der Einlassadapter (33, 35) um 180 Grad entsprechen.

14. Armatur nach einem der Ansprüche 9 bis 13, wobei jeder Einlass (7, 9) einen Marker zum Bereitstellen einer visuellen Anzeige der Position des zugehörigen Einlassadapters (33, 35) beinhaltet.

15. Verfahren zum Installieren einer Armatur, aufweisend ein Ventil zum Mischen von Warm- und Kaltwasser, wobei das Verfahren die Schritte des Bereitstellens eines ersten Einlasses (7) mit einem Einlassadapter (33) zum Verbinden einer ersten Wasserversorgung mit einer von einer warmen Seite zum Empfangen von Warmwasser und einer kalten Seite zum Empfangen von Kaltwasser des Ventils und eines zweiten Einlasses (9) mit einem Einlassadapter (35) zum Verbinden einer zweiten Wasserversorgung mit der anderen von der warmen Seite und der kalten Seite des Ventils umfasst, und Konfigurieren der Einlassadapter (33, 35) zum Verbinden der warmen und kalten Seiten des Ventils mit den richtigen Zuführungen,
**dadurch gekennzeichnet, dass**
jeder Einlass (7, 9) sowohl mit der warmen als auch mit der kalten Seite des Ventils in Verbindung steht und der zugehörige Einlassadapter (33, 35) angeordnet ist, um einen Fluidstrom zu einer Seite zu ermöglichen und einen Fluidstrom zur anderen zu blockieren.

## Revendications

1. Robinet présentant une soupape pour le mélange d'eau chaude et froide, la soupape présentant un côté chaud pour la réception d'eau chaude et un côté froid pour la réception d'eau froide, une première entrée (7) avec un adaptateur d'entrée (33) pour la liaison d'une première alimentation d'eau à un du côté chaud et du côté froid de la soupape, et une seconde entrée (9) avec un adaptateur d'entrée (35) pour la liaison d'une seconde alimentation d'eau à l'autre du côté chaud et du côté froid de la soupape, **caractérisé en ce que**
chaque entrée (7, 9) communique à la fois avec le côté chaud et le côté froid de la soupape et l'adaptateur d'entrée associé (33, 35) est agencé pour permettre le flux de fluide vers un côté et pour bloquer le flux de fluide vers l'autre côté.

2. Robinet selon la revendication 1, dans lequel les adaptateurs d'entrée (33, 35) peuvent être configurés pour raccorder sélectivement la première entrée (7) au côté froid et la seconde entrée (9) au côté chaud ou la première entrée (7) au côté chaud et la seconde entrée (9) au côté froid.

3. Robinet selon une quelconque revendication précédente, dans lequel chaque entrée (7, 9) présente une ouverture vers le côté chaud (7b, 9b) et une autre ouverture (7a, 9a) vers le côté froid de la soupape dans lequel une des ouvertures (7a, 7b, 9a, 9b) est fermée par l'adaptateur d'entrée (33, 35) pour bloquer le flux de fluide vers un côté de la soupape et l'autre ouverture (7a, 7b, 9a, 9b) est ouverte pour permettre le flux de fluide vers l'autre côté de la soupape.

4. Robinet selon la revendication 3, dans lequel les adaptateurs d'entrée (33, 35) comprennent des éléments (33, 35) qui peuvent être insérés dans les ouvertures d'entrée (37, 39) pour bloquer le flux de fluide.

5. Robinet selon la revendication 4, dans lequel les éléments (33, 35) sont configurés de sorte qu'un seul élément (33, 35) puisse être inséré dans chaque entrée (7, 9) pour fermer l'ouverture (37, 39) vers le côté chaud ou le côté froid de la soupape.

6. Robinet selon la revendication 4 ou la revendication 5, dans lequel deux éléments (33, 35) sont prévus, un élément (33, 35) étant configuré pour fermer une ouverture (7a, 9a) vers le côté froid de la soupape et l'autre élément (33, 35) étant configuré pour fermer une ouverture (7b, 9b) vers le côté chaud de la soupape.

7. Robinet selon l'une quelconque des revendications 4 à 6, dans lequel les éléments (33, 35) sont distingués par taille et/ou forme et/ou couleur.

8. Robinet selon l'une quelconque des revendications 4 à 7, dans lequel les ouvertures (37, 39) et/ou éléments (33, 35) sont configurés de sorte que l'élément (33, 35) pour la fermeture d'une ouverture (7b, 9b) vers le côté chaud de la soupape ne puisse pas être installé dans une ouverture (7a, 9a) vers le côté froid de la soupape, et l'élément (33, 35) pour la fermeture d'une ouverture (7a, 9a) vers le côté froid de la soupape ne puisse pas être installé dans une ouverture (7b, 9b) vers le côté chaud de la soupape.

9. Robinet selon l'une quelconque des revendications 1 à 3, dans lequel les adaptateurs d'entrée (33, 35) comprennent des éléments (33, 35) présentant une première position dans laquelle le flux de fluide vers le côté froid de la soupape est bloqué et le flux de fluide vers le côté chaud de la soupape est permis et une seconde position dans laquelle le flux de fluide vers le côté froid de la soupape est permis et le flux de fluide vers le côté chaud de la soupape est bloqué.

10. Robinet selon la revendication 9, dans lequel chaque adaptateur d'entrée (33, 35) présente une portion solide bloquant le flux de fluide et une portion à orifices (33a, 35a) permettant le flux de fluide.

11. Robinet selon la revendication 9 ou la revendication 10, dans lequel chaque adaptateur d'entrée (33, 35) peut être commuté entre les première et seconde positions pour l'inversion des connexions d'eau chaude et froide à la soupape.

12. Robinet selon la revendication 11, dans lequel chaque entrée (7, 9) inclut un actionneur (113) pour la commutation manuelle de l'adaptateur d'entrée associé (33, 35) entre les première et seconde positions.

13. Robinet selon la revendication 12, dans lequel les adaptateurs d'entrée (33, 35) sont rotatifs entre les première et seconde positions, en option dans lequel les première et seconde positions correspondent à la rotation des adaptateurs d'entrée (33, 35) au travers de 180 degrés.

14. Robinet selon l'une quelconque des revendications 9 à 13, dans lequel chaque entrée (7, 9) inclut un marqueur pour fournir une indication visuelle de la position de l'adaptateur d'entrée associé (33, 35).

15. Procédé d'installation d'un robinet présentant une soupape pour le mélange d'eau chaude et froide, le procédé incluant les étapes de fourniture d'une première entrée (7) avec un adaptateur d'entrée (33) pour le raccordement d'une première alimentation d'eau à un parmi un côté chaud, pour la réception d'eau chaude, et un côté froid, pour la réception d'eau froide, de la soupape, et une seconde entrée (9) avec un adaptateur d'entrée (35) pour le raccordement d'une seconde alimentation d'eau à l'autre du côté chaud et côté froid de la soupape, et la configuration des adaptateurs d'entrée (33, 35) pour le raccordement des côtés chaud et froid de la soupape aux bonnes alimentations, **caractérisé en ce que**
chaque entrée (7, 9) communique à la fois avec le côté chaud et le côté froid de la soupape et l'adaptateur d'entrée associé (33, 35) est agencé pour permettre le flux de fluide vers un côté et pour bloquer le flux de fluide vers l'autre.
